# EUROPEAN PATENT APPLICATION

(11) **EP 1 357 454 A1**
(43) Date of publication of application: **29.10.2003**
(21) Application number: 02354066.9
(22) Date of filing: 23.04.2002
(51) Int. Cl.: G06F 1/00, G06F 9/445

(54) **Data processing system and method with protected BIOS**

(71) Applicant: Hewlett-Packard Company, Palo Alto, CA 94304 (US)
(72) Inventor: Neuman, Paul, 38640 Claix (FR); Stephan, Yann, 38130 Echirolles (FR)
(74) Representative: Lloyd, Richard Graham (GB)

(57) **Abstract**

The present invention relates to a data processing system and method having improved BIOS protection. Furthermore, since the BIOS protection is implemented in software, rather than, as is conventional, via a chipset and additional hardware, the BIOS protection is largely independent of a motherboard manufacturer. Embodiments of the invention take advantage of the system management mode of operation of Intel processors during which software outside of the system management RAM cannot execute and cannot interrupt code that is executing within the system management mode as a consequence of responding to a system management interrupt. The system management mode code compares a supplied access key with an embedded access key to determine if external software is allowed to access and change the BIOS. Any attempt at changing the BIOS by the external software generates an SMI interrupt, which then invokes the SMM code. If the supplied key matches the embedded key, a write cycle received by the ICH2 is allow to proceed or complete by changing the status of a software controllable write enable bit within the ICH2.

## Description

### Field of the Invention

The present invention relates to a data processing system and method and, more particularly, to such a system and method having flash BIOS write protection.

### Background to the Invention

Modern computers conventionally have a BIOS that is stored using flash memory. This has the advantage that it is relatively straightforward to change or update the BIOS as a BIOS manufacturer releases new versions of the BIOS code. Typically, access to the flash BIOS is gained via GPIO lines of an I/O controller hub. Such a hub is available from Intel. One of the lines is connected to a write enable/disable pin of the flash BIOS and is used, according to its state, to allow software to write to the flash BIOS.

While such access is clearly desirable to allow a computer system to use the most recent BIOS code within the BIOS, it presents several difficulties. Firstly, computer viruses such as, for example, the family of CIH viruses, which include Win32/CIH etc., are designed to corrupt the BIOS code stored by the flash memory. Any such corruption is undesirable as it may render the computer system unusable. Secondly, the mechanism by which the flash BIOS is accessed is largely dependent upon the design of the motherboard and, in particular, the chipsets used to realise the motherboard.

Still further, the conventional techniques of protecting the flash BIOS using, for example, GPIO requires strong BIOS customisation. This leads to increased manufacturing costs and reduced manufacturing flexibility.

It is an object of the present invention at least to mitigate some of the problems of the prior art.

### Summary of Invention

Accordingly, a first aspect of the present invention provides a data processing system comprising a processor, a programmable memory, a controller for controlling access to the programmable memory according to the state of a software programmable indicator contained within the controller and for generating an interrupt in response to receipt of an instruction for changing the state of the indicator, and an uninterruptable software routine that is invoked in response to the generation of the interrupt; the uninterruptable routine having means to determine whether to the first software is authorised to write to the programmable memory and to change the state of the software programmable indicator to allow the first software to write to the programmable memory according to the determination.

Advantageously, external software, such as user software or malicious software, in a form of a virus, cannot, without having an appropriate code or key, gain access to the BIOS.

It will be appreciated that by invoking the uninterruptable routine using an interrupt the software will have neither the time nor the processing capacity to make any changes to a flash BIOS.

Preferred embodiments provide a data processing system in which the interrupt is an SMI interrupt and the uninterruptable routine is system management mode code. Advantageously, using the SMI interrupt causes the processor to enter a protected operating environment in which the execution of all software is halted but for code contained within the protected environment.

Embodiments provide a data processing system further comprising a first access code stored within a predetermined memory location accessible by the uninterruptable routine but not by any other software, means for receiving a second access code associated with, or from, the first software; and in which the uninterruptable routine means for determining comprises means for comparing the first and second access codes to determine if the first software is authorised to access the programmable memory, and means for allowing or preventing access to the programmable memory according to the determination. Advantageously, unless the external software provides the appropriate code, access to the flash BIOS will not be granted. There is also no inherent security risk in having an embedded code since external software cannot access the SMRAM, that is, the protected environment presented by a system management mode of a processor.

Preferably, the programmable memory is a programmable BIOS ROM, such as, for example, a flash BIOS ROM or other programmable device.

Preferred embodiments provide a data processing system in which the uninterruptable routine cannot be invoked by an operating system or other software.

Embodiments provide a data processing system comprising a processor, a programmable memory and an uninterruptable routine that is invoked, by an access controller, in response to an attempt by first software to modify the status of a write protection indicator associated with the programmable memory; the uninterruptable routine having means to determine whether to the first software is authorised to modify the status of the write protection indicator; and to prevent access to the programmable flash memory if the uninterruptable routine determines that the first software is not authorised to modify the status of the write protection indicator associated with the programmable memory.

### Brief Description of the Drawings

Embodiments of the present invention will now be described, by way of example only, with reference to the accompanying drawings in which:
figure 1 illustrates a computer system;
figure 2 illustrates, in greater detail, a chipset, according to an embodiment, for the computer system figure 1;
figure 3 illustrates a first embodiment of the present invention with flash BIOS write disabled; and
figure 4 illustrates the first embodiment of the present invention with flash BIOS write enabled.

### Description of Preferred Embodiments

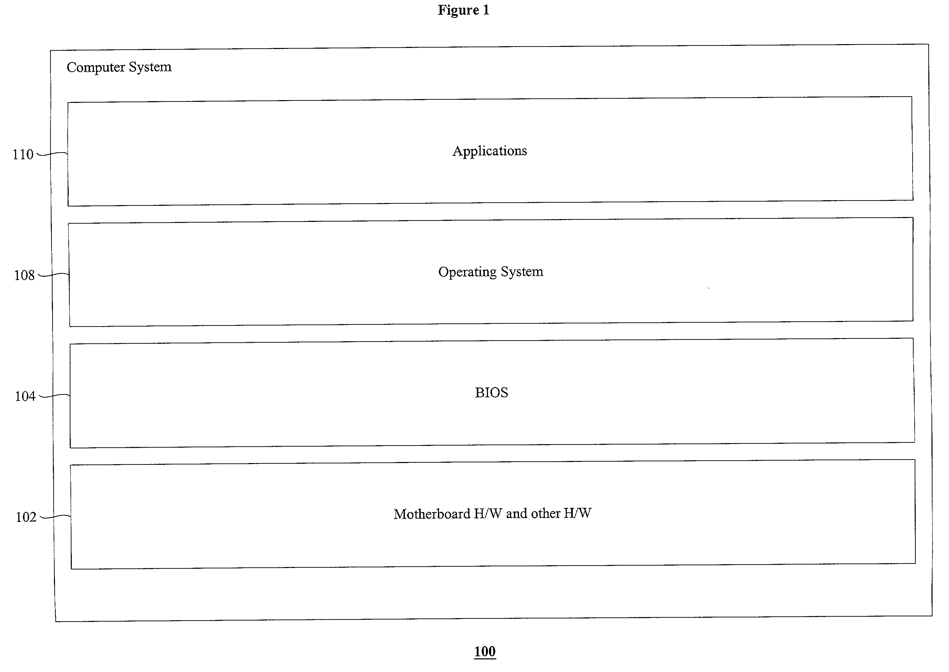

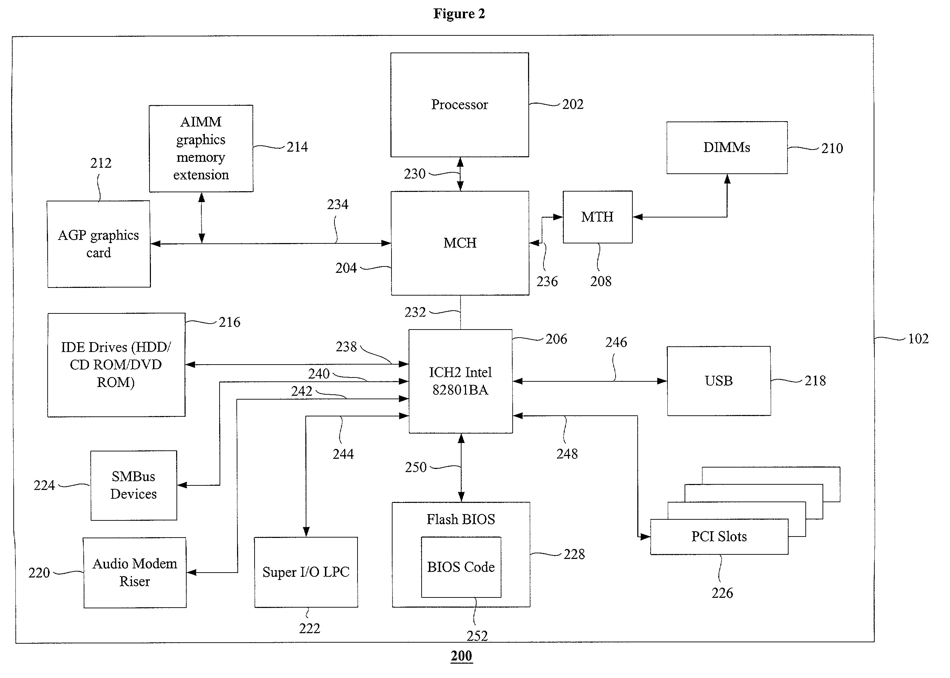

Referring to figure 1, there is shown a computer system 100. The computer system 100 comprises a motherboard and associated hardware 102, including a chipset, described in greater detail with reference to figure 2. The computer system 100 has a BIOS 104 which, as is conventional, initialises the computer system 100 and performs various Power-On Self-Tests. The BIOS 104 also acts an interface between the motherboard hardware 102 and an operating system 108. The operating system 108 is used to control the operation of the computer system 100 and to coordinate the use of the resources (not shown) of the computer system 100. The operating system 108 is also used to launch, and govern, the execution of various applications 110.

Referring to figure 2, there is shown, schematically, a chipset 200 for the motherboard hardware 102. The chipset 200 comprises a processor 202, a memory hub controller (MCH) 204, an I/O controller hub (ICH2) 206, a memory translator hub (MTH) 208, which maps to DIMMs 210 to provide system RAM. The chipset 200 also comprises graphics facilities in the form of an AGP graphics card 212 and, optionally, an AIMM graphics memory extension slot 214. A number of IDE drives 216, such as, for example, an HDD/CD ROM/DVD ROM, are provided. A USB port 218 is also provided. The chipset 200 additionally comprises an audio modem riser 220, a Super I/O LPC 222, SMBus devices 224, various PCI slots 226, which can be used to host various cards such as communication cards, network cards, ISA bridges on an ISA extension, and a flash BIOS 228. The processor 202 may be an Intel processor such as, for example, a Pentium III processor, a Pentium IV processor or any other processor with a comparable system management mode of operation. It will be appreciated that the SMM of operation represents a protected environment.

The MCH 204 includes a processor interface 230, an I/O interface 232, an AGP interface 234 and an SRAM interface 236.

The ICH2 206 is the Input/Output controller hub for the input output system, which integrates many of the functions required by modern PC platforms. The ICH2 206 may be realised using an Intel 82801BA I/O Controller Hub 2. The data sheet for such an I/O controller hub is available from Intel and is incorporated herein by reference for all purposes.

The MTH 208 allows the processor 202 to support or interact with DIMM (SDRAM) type memory 210.

The ICH2 206 comprises a number of interfaces 238, 240, 242, 244, 246, 248, 250 and 252. The interfaces include an IDE drive interface 238, an SMBus devices interface 240, an AMR interface 242 as well as a Super I/O LPC interface 244. A USB interface 246 and a PCI interface 248 are also provided. The ICH2 206 also has a flash BIOS interface 250.

The flash BIOS interface 250 is used to access to the flash BIOS 228, for example, to enable the BIOS code 252 to be modified. In preferred embodiments, the interface 250 between the ICH2 206 and the flash BIOS 228 is realised using a Low Pin Count bus. Access to the flash BIOS 228 is controlled using the LPC interface bridge registers (D31-F0) and, more particularly, BIOS_CNTL (LPC I/F-D31:F0). The BIOS Lock Enable, in conjunction with the BIOS Write Enable, having been appropriately set, allow or prevent access to the flash BIOS 228.

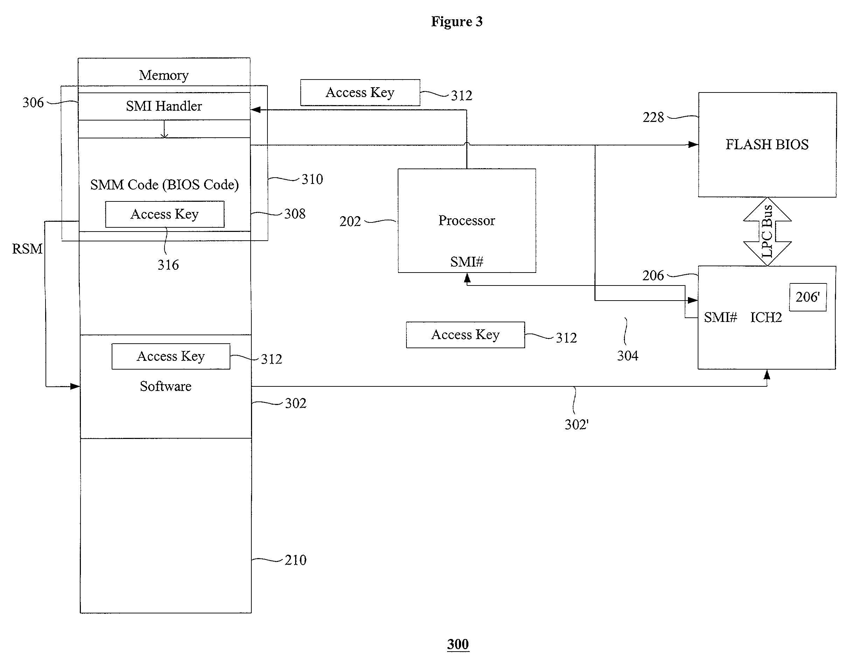

Referring to figure 3, there is shown, in greater detail, an interaction 300 between the ICH2 206, the flash BIOS 228, the processor 202 and the memory 210 according to an embodiment. The interaction 300 is such that if memory resident software 302 attempts to access, or requests access to, the flash BIOS 228, or the BIOSLE or BIOSWE, via the ICH2 206, the ICH2 206 is arranged to trap a write cycle on the bus to the flash BIOS 228 and outputs a System Management Interrupt (SMI#) 304 to the processor 202 in response to that trap. The trap prevents the operation of the write cycle.
The processor 202, upon receiving the SMI interrupt 304, enters a system management mode in which the processor transfers control to an SMI handler 306. The SMI handler 306 is arranged to invoke system management code 308. The SMI handler 306 and the system management code 308 are stored and executable within a separate operating environment contained within system management RAM (SMRAM) 310. The SMM code 308 is used to determine whether or not the software 302 has supplied an access key 312. The access key 312 is used to control whether or not the software 302 is allowed access to the flash BIOS 228. The access key 312 is passed to the SMI handler 306 as an interrupt parameter.

It will be appreciated that the request 302' issued by the software 302 to the ICH2 206 to change the state of the BIOSWE bit is not sufficient to allow the software 302 to make any changes to the BIOS code 252 or to the context of the flash BIOS 228 until the processor leaves the system management mode. This follows from the secure nature of the SMM in which the context of the processor prior to entering the SSM will have been saved and the SSM code cannot be interrupted at all, not even by a subsequent SMI.

The system management mode code 308 compares the supplied access key 312, if any, with an SMM access key 316 to determine if the software 302 is authorised to access, and to make changes to, the flash BIOS 228. If the SMM code 308 determines that the software 302 is not authorised to access and to modify the BIOS code 252, the SMM code 308 does not take any action to allow the write cycle to progress, which prevents the software 302 from accessing the flash BIOS 228. Once the SMM code 308 has finished executing, control is returned to the software 302 via an RSM instruction, which can only be executed within the system management mode and which is not accessible to the software 302. The access key 316 stored within the SMRAM 310 cannot be read in advance by user software or malicious software since the storage represented by the SMRAM 310 cannot be accessed other than via an SMI interrupt being generated and during SMM.

It can be appreciated that upon returning from the SMM, control is returned to the software 302. However, since the SMM code 308 did not take any action to allow the write cycle to progress, the software 302 will not have managed to access the flash BIOS 228.

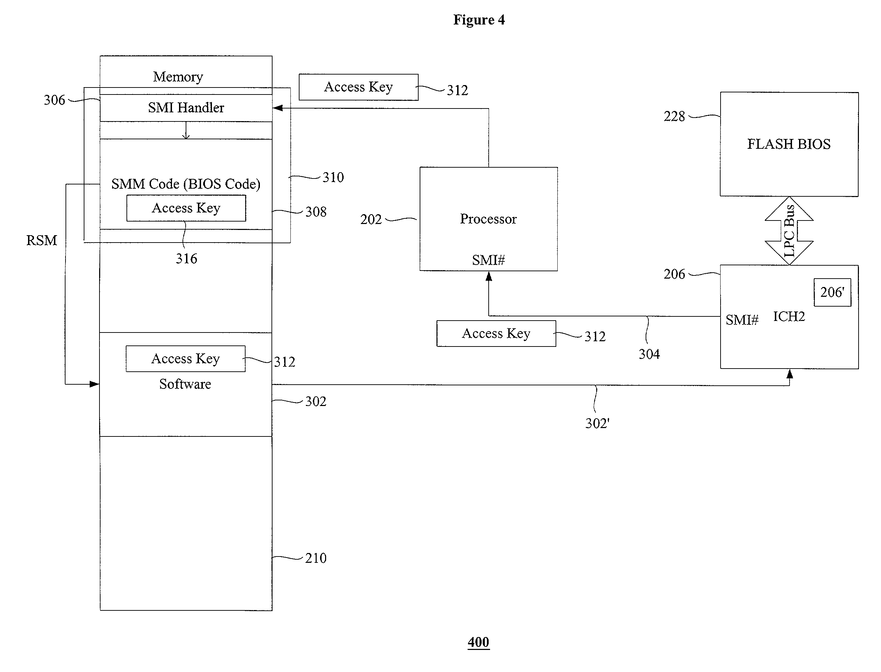

Referring to figure 4, there is shown the same arrangement as illustrated in figure 3 with the exception that the access key 312 is assumed to match the SMM access key 316. Therefore, the SMM code 308 instructs the ICH2 206 to allow the write cycle to progress. Therefore, once the RSM instruction has been executed by the SMM code 308, control is returned to the software 302, which is then able to write to the flash BIOS 228 since the state of the BIOSLE and BIOSWE will have changed appropriately by the SMM code 308.

It can be appreciated that the software 302 forwards a request to the ICH2 206 for access to the flash BIOS 228. In response to receiving the request, the ICH2 206 raises an SML. The processor 202 responds to the SMI interrupt, SMI#, by saving the current processor context and entering the system management mode. The SMI handler 306 directs the processor to execute the SMM code 308. The SMM code 308 compares a received access key 312 with an embedded access key 316. If the keys 312 and 316 match, the SMM code 308 is arranged to change the flash BIOS write enable bit 206' to allow writing to the flash BIOS 228 and the processor executes an RSM instruction, which returns the processor from the system management mode and returns control to the software 302. However, if the keys 312 and 316 do not match, the SMM code 308 merely executes the RSM instructions without changing the status of the flash BIOS write enable bit 206'.

It will be appreciated that the combination of an uninterruptable SMM routine, which can control the write enable/disable status of the flash BIOS 228 within the ICH 206, together with access keys, allows software protection of the flash BIOS to be realised.

Advantageously, the software solution to at least some of the above problems offered by the embodiments of the present invention reduces motherboard layout costs and introduces an element of flexibility in the implementation of flash BIOS write protection.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing system comprising a processor, a programmable memory, a controller for controlling access to the programmable memory according to the state of a software programmable indicator contained within the controller and for generating an interrupt in response to receipt of an instruction for changing the state of the indicator, and an uninterruptable software routine that is invoked in response to the generation of the interrupt; the uninterruptable routine having means to determine whether to the first software is authorised to write to the programmable memory and to change the state of the software programmable indicator to allow the first software to write to the programmable memory according to the determination.

2. A data processing system as claimed in claim 1, in which the interrupt is an SMI interrupt and the uninterruptable routine is system management mode code executable within a constrained or protected operating environment.

3. A data processing system as claimed in any preceding claim, further comprising a first access code stored within a predetermined memory location accessible only by the uninterruptable routine; means for receiving a second access code associated with, or from, the first software; and in which the uninterruptable routine means for determining comprises means for comparing the first and second access codes to determine if the first software is authorised to access the programmable memory.

4. A data processing system as claimed in any preceding claim, in which the programmable memory is a programmable ROM.

5. A data processing system as claimed in claim 4, in which the programmable memory is a flash BIOS ROM.

6. A data processing system as claimed in any preceding claim, in which the uninterruptable routine cannot be invoked by an operating system or other software.

7. A computer program element comprising code means for implementing a system as claimed in any preceding claim.

8. A computer program product comprising a computer readable storage medium having stored thereon a computer program element as claimed in claim 7.
